# EUROPÄISCHE PATENTANMELDUNG

(11) **EP 3 783 579 A1**
(43) Veröffentlichungstag der Anmeldung: **24.02.2021**
(21) Anmeldenummer: 19192297.0
(22) Anmeldetag: 19.08.2019
(51) Int. Cl.: G08B 21/22, G08B 21/24, G01S 13/04, G01S 13/50

(54) **VORRICHTUNG ZUM ÜBERWACHEN EINES INNENRAUMS EINES FAHRZEUGS UMFASSEND EINEN RADARSENSOR SOWIE VERFAHREN**

(71) Anmelder: Valeo Comfort and Driving Assistance, 94046 Créteil Cedex (FR)
(72) Erfinder: ALBESA, Bruno, 94046 Créteil (FR); VEHLEWALD, BERND, 94046 Créteil (FR); PERSIANI, Vincent, 94046 Créteil CEDEX (FR); KAISER, Frank, 74321 Bietigheim-Bissingen (DE)
(74) Vertreter: Enge, Sebastian

(57) **Zusammenfassung**

Die Erfindung betrifft eine Vorrichtung (1) zum Überwachen eines Innenraums eines Fahrzeugs, umfassend eine Sensoreinrichtung (2) zum Erfassen eines Lebewesens in dem Innenraum und eine Recheneinrichtung (4) zum Ausgeben eines Warnsignals beim Erkennen des Lebewesens in dem Innenraum mittels der Sensoreinrichtung, wobei die Vorrichtung (1) mobil ausgebildet ist und in dem Innenraum des Fahrzeugs anordenbar ist, wobei die Sensoreinrichtung (2) einen Radarsensor (3) zum Aussenden und Empfangen von Radarsignalen umfasst und die Recheneinrichtung (4) ausgebildet ist, anhand der ausgesendeten und empfangen Radarsignale eine Bewegung des Lebewesens zu erkennen.

## Beschreibung

Die vorliegende Erfindung betrifft eine Vorrichtung zum Überwachen eines Innenraums eines Fahrzeugs, umfassend eine Sensoreinrichtung zum Erfassen eines Lebewesens in dem Innenraum und eine Recheneinrichtung zum Ausgeben eines Warnsignals beim Erkennen des Lebewesens in dem Innenraum mittels der Sensoreinrichtung, wobei die Vorrichtung mobil ausgebildet ist und in dem Innenraum des Fahrzeugs anordenbar ist. Des Weiteren betrifft die vorliegende Erfindung ein Verfahren zum Überwachen eines Innenraums eines Fahrzeugs.

Aus dem Stand der Technik sind Vorrichtungen bekannt, mit welchen der Innenraum des Fahrzeugs überwacht werden kann. Vorliegend richtet sich das Interesse auf die Erkennung von Lebewesen, welche im Fahrzeug zurückgelassen werden. Derartige Vorrichtungen dienen beispielsweise dazu, eine entsprechende Warnung auszugeben, falls ein Säugling oder ein Kleinkind in dem Fahrzeug zurückgelassen wurde. Falls ein Lebewesen beispielsweise bei sehr hohen Umgebungstemperaturen im Fahrzeug zurückgelassen wird, können Verletzungen oder sogar der Tod des Lebewesens die Folge sein.

Aus dem Stand der Technik sind hierzu Vorrichtungen bekannt, welche in das Fahrzeug integriert sind beziehungsweise fest in dem Fahrzeug verbaut sind. Solche Vorrichtungen weisen üblicherweise eine Sensoreinrichtung auf, mittels welcher ein Lebewesen in dem Innenraum erkannt werden kann. Falls zudem erkannt wird, dass das Fahrzeug abgestellt wurde beziehungsweise der Fahrer das Fahrzeug verlassen hat, kann ein entsprechendes Warnsignal ausgegeben werden. Beispielsweise kann eine Hupe des Fahrzeugs aktiviert werden. Es kann auch vorgesehen sein, dass in diesem Fall die Fenster des Fahrzeugs geöffnet werden.

Hierzu beschreibt die US 2015/0274036 A1 einen Monitor zum Erfassen eines potentiellen Verlassens eines Kindes auf einem Fahrzeugsitz. Der Monitor umfasst einen Abstandssensor, wobei der Abstandssensor einen Infrarotsender, der zum Senden und Empfangen modulierter Infrarotimpulse konfiguriert ist. Zudem kann mittels einer Steuerung eine Warnung an ein Benutzergerät übertragen werden.

Des Weiteren sind aus dem Stand der Technik mobile Module bekannt, welche beispielsweise eine Temperatur erfassen können. Ein solches Modul kann beispielsweise mit einem Smartphone gekoppelt sein. Falls die Temperatur einen Grenzwert überschreitet, kann eine Warnung auf dem Smartphone ausgeben werden.

Es ist Aufgabe der vorliegenden Erfindung, eine Lösung aufzuzeigen, wie die Überwachung eines Innenraums eines Fahrzeugs mit einer mobilen Vorrichtung zuverlässiger durchgeführt werden kann.

Diese Aufgabe wird erfindungsgemäß durch eine Vorrichtung sowie durch ein Verfahren mit den Merkmalen gemäß den unabhängigen Ansprüchen gelöst. Vorteilhafte Weiterbildungen der Erfindung sind in den abhängigen Ansprüchen angegeben.

Eine erfindungsgemäße Vorrichtung dient zum Überwachen eines Innenraums eines Fahrzeugs. Die Vorrichtung umfasst eine Sensoreinrichtung zum Erfassen eines Lebewesens in dem Innenraum. Des Weiteren umfasst die Vorrichtung eine Recheneinrichtung zum Ausgeben eines Warnsignals beim Erkennen des Lebewesens in dem Innenraum mittels der Sensoreinrichtung. Dabei ist die Vorrichtung mobil ausgebildet und ist in dem Innenraum des Fahrzeugs anordenbar. Ferner umfasst die Sensoreinrichtung einen Radarsensor zum Aussenden und Empfangen von Radarsignalen. Außerdem ist die Recheneinrichtung dazu ausgebildet, anhand der ausgesendeten und empfangen Radarsignale eine Bewegung des Lebewesens zu erkennen.

Mithilfe der Vorrichtung soll überwacht werden, ob sich ein Lebewesen in dem Innenraum des Fahrzeugs befindet. Insbesondere dient die Vorrichtung dazu, zu überprüfen, ob ein Kind oder ein Säugling in dem Innenraum des Fahrzeugs zurückgelassen oder vergessen wurde. Mittel der Vorrichtung kann der Innenraum insbesondere überwacht werden, wenn das Fahrzeug abgestellt wurde und/oder ein Fahrer das Fahrzeug verlassen hat. Dabei ist die Vorrichtung mobil beziehungsweise tragbar ausgebildet. Dies bedeutet insbesondere, dass die Vorrichtung aus dem Fahrzeug reversibel und zerstörungsfrei entnommen werden kann und auch wieder in dem Fahrzeug angeordnet werden kann. Die Vorrichtung kann also transportabel ausgebildet sein. Die Vorrichtung kann insbesondere nachträglich in dem Innenraum des Fahrzeugs angeordnet oder befestigt werden. Insbesondere kann die Vorrichtung derart in dem Fahrzeug angeordnet werden, dass ein Bereich der Rücksitze überwacht werden kann. Als Lebewesen sollen mittels der Vorrichtung insbesondere Kleinkinder oder Säuglinge erkannt werden. Es kann auch vorgesehen sein, dass mittels der Vorrichtung Tiere, welche in dem Fahrzeug zurückgelassen werden, erkannt werden.

Die Vorrichtung umfasst die Sensoreinrichtung, mittels welcher das Lebewesen beziehungsweise das Kleinkind oder der Säugling erfasst werden können. Die Sensoreinrichtung kann entsprechende Sensorsignale an die Recheneinrichtung übertragen. Die Recheneinrichtung kann dann die Sensorsignale auswerten und überprüfen, ob das Lebewesen in dem Innenraum vorhanden ist. Wenn mittels der Recheneinrichtung erkannt wird, dass sich das Lebewesen in dem Innenraum des Fahrzeugs befindet beziehungsweise in dem Innenraum des Fahrzeugs zurückgelassen wurde, kann mittels der Recheneinrichtung das Warnsignal ausgegeben werden. Als Folge auf die Ausgabe des Warnsignals kann dann ein Warnton ausgegeben werden oder es kann eine entsprechende Nachricht an den Fahrer des Fahrzeugs übermittelt werden. Somit kann der Fahrer des Fahrzeugs oder auch andere Personen darüber informiert werden, dass das Lebewesen in dem Fahrzeug zurückgelassen wurde.

Gemäß einem wesentlichen Aspekt der Erfindung ist vorgesehen, dass die Sensoreinrichtung den Radarsensor umfasst. Der Radarsensor kann eine Sendeeinrichtung aufweisen, mittels welcher das Radarsignal ausgesendet werden kann. Zudem kann der Radarsensor eine Empfangseinrichtung aufweisen, mittels welcher das reflektierte Radarsignal wieder empfangen werden kann. Es kann auch vorgesehen sein, dass mit der Sendeeinrichtung beziehungsweise dem Radarsensor zeitlich aufeinanderfolgend Radarsignale in vorbestimmte Winkelbereich ausgesendet werden. Somit können die einzelnen Winkelbereiche auf das Vorhandensein des Lebewesens hin überprüft werden. Des Weiteren ist vorgesehen, dass der Radarsensor dazu ausgebildet ist, anhand des ausgesendeten Radarsignals und/oder des reflektierten Radarsignals eine Bewegung des Objekts zu erfassen. Hierbei wird berücksichtigt, dass ein zurückgelassenes Lebewesen auf Grundlage der Bewegung erkannt werden kann. Außerdem kann auch berücksichtigt werden, dass das Lebewesen beispielsweise bewusst in dem Fahrzeug zurückgelassen wird. Dies kann beispielsweise der Fall sein, wenn das Lebewesen beziehungsweise das Kind schläft. Wenn das Lebewesen dann aufgewacht ist und es sich bewegt, kann das Warnsignal ausgegeben werden und auf diese Weise kann der Fahrer darauf hingewiesen werden, dass das Lebewesen beziehungsweise das Kind aufgewacht ist. Durch die Verwendung des Radarsensors in der mobilen beziehungsweise transportablen Vorrichtung kann der Innenraum des Fahrzeugs auf zuverlässige Weise überwacht werden.

Bevorzugt ist die Recheneinrichtung dazu ausgebildet, anhand einer Doppler-Verschiebung zwischen den ausgesendeten Radarsignalen und den empfangenen Radarsignalen die Bewegung des Lebewesens zu erfassen. Mit anderen Worten kann also mit dem Radarsensor anhand der Doppler-Verschiebung des Radarsignals die Bewegung des Lebewesens erkannt werden. Damit kann die Bewegung des Objekts auf zuverlässige Weise erkannt werden. Es kann auch vorgesehen sein, dass anhand einer Laufzeit zwischen dem Aussenden des Radarsignals und dem Empfangen des von dem Lebewesen reflektierten Radarsignals fortlaufend der Abstand zwischen dem Radarsensor und dem Objekt bestimmt wird. Falls sich der Abstand ändert, kann auf eine Bewegung des Lebewesens rückgeschlossen werden.

Dabei kann es vorgesehen sein, dass das Warnsignal in Abhängigkeit von der Art und/oder Zeitdauer der Bewegung des Lebewesens ausgegeben wird. Beispielsweise kann unterschieden werden, ob das Lebewesen nur geringere Bewegungen ausführt und beispielsweise weiterhin schläft. Hierzu kann die erkannte Bewegung beispielsweise mit vorbestimmten Referenz-Bewegungen verglichen werden. Es kann auch die Zeitdauer der erkannten Bewegung überprüft werden. Wenn die erkannte Bewegung beispielsweise eine vorbestimmte Zeitdauer überschreitet, kann das Warnsignal ausgegeben werden.

In einer weiteren Ausführungsform weist die Vorrichtung ein Positionsbestimmungssystem zum Bereitstellen von Positionsdaten auf und die Recheneinrichtung dazu ausgebildet ist, einen Abstellen des Fahrzeugs anhand der Positionsdaten zu erkennen. Beispielsweise kann das Positionsbestimmungssystem ein satellitengestützte Positionsbestimmungssystem sein. Beispielsweise kann das Positionsbestimmungssystem ein GPS-Empfänger sein oder einen solchen aufweisen. Mithilfe des Positionsbestimmungssystems kann die Position der Vorrichtung fortlaufend bestimmt werden. Mit dem Positionsbestimmungssystem können die Positionsdaten bereitgestellt werden und an die Recheneinrichtung übertragen werden. Somit liegen innerhalb der Recheneinrichtung Informationen über die aktuelle Position der Vorrichtung beziehungsweise des Fahrzeugs vor. Mittels der Recheneinrichtung kann somit beispielsweise erkannt werden, ob sich das Fahrzeug mit der Vorrichtung aktuell bewegt oder ob das Fahrzeug abgestellt wurde. Dies kann beispielsweise daran erkannt werden, dass sich die Position der Vorrichtung für eine vorbestimmte Zeitdauer nicht geändert hat. Hieraus kann auf einfache und zuverlässige Weise abgeleitet werden, dass das Fahrzeug abgestellt wurde.

Bevorzugt ist die Recheneinrichtung dazu ausgebildet, das Warnsignal bei einem erkannten Abstellen des Fahrzeugs auszugeben. Es kann also insbesondere vorgesehen sein, dass das Vorhandensein des Lebewesens in dem Fahrzeug nur dann überprüft wird, falls erkannt wurde, dass das Fahrzeug abgestellt wurde. Erst in diesem Fall kann überprüft werden, ob sich noch ein Lebewesen in dem Innenraum des Fahrzeugs befindet beziehungsweise ob dieses zurückgelassen wurde. Es kann auch vorgesehen sein, dass das Warnsignal nur dann ausgegeben wird, falls davon ausgegangen werden kann, dass das Fahrzeug abgestellt wurde. Somit kann der Fahrzeuginnenraum nach dem Abstellen des Fahrzeugs auf zuverlässige Weise überwacht werden. Ferner kann verhindert werden, dass das Warnsignal während der Bewegung beziehungsweise Fahrt des Fahrzeugs fehlerhaft ausgegeben wird.

In einer weiteren Ausgestaltung weist die Vorrichtung eine Kommunikationseinrichtung auf, welche dazu ausgebildet ist, bei der Ausgabe des Warnsignals eine Kommunikationsverbindung aufzubauen. Beispielsweise kann die Kommunikationseinrichtung dazu ausgebildet sein, die Kommunikationsverbindung zu einem Telefon oder Mobiltelefon aufzubauen. Insbesondere ist es vorgesehen, dass mittels der Kommunikationseinrichtung die Kommunikationsverbindung zu einem Mobiltelefon des Fahrers des Fahrzeugs aufgebaut werden kann. Beispielsweise kann die Kommunikationseinrichtung ein GSM-Interface aufweisen. Zudem kann die Kommunikationseinrichtung eine SIM-Karte und/oder eine Antenne aufweisen. Somit kann beim Ausgeben des Warnsignals eine Telefonverbindung aufgebaut werden. Alternativ oder zusätzlich kann es auch vorgesehen sein, dass eine Textnachricht an ein externes Gerät übertragen wird. Somit kann beispielsweise ein Fahrer auf zuverlässige Weise gewarnt werden, wenn dieser sein Kind im Fahrzeug zurückgelassen hat.

Wenn mittels der Kommunikationseinrichtung eine Kommunikationsverbindung aufgebaut werden soll, können beispielsweise unterschiedliche externe Kommunikationspartner vorgegeben werden, zu denen die Kommunikationsverbindung aufgebaut wird. Es kann auch eine bestimmte Reihenfolge vorgegeben werden. Beispielsweise kann zunächst eine erste gespeicherte Rufnummer gewählt werden. Falls diese nicht erreicht werden kann, kann eine zweite gespeicherte Rufnummer gewählt werden. Falls auch die zweite Rufnummer nicht erreicht werden kann, kann eine vorgegebene Notrufnummer gewählt werden.

In einer weiteren Ausgestaltung weist die Vorrichtung einen Temperatursensor zum Messen einer Temperatur in dem Innenraum auf und die Recheneinrichtung dazu ausgebildet ist, das Warnsignal in Abhängigkeit von der gemessenen Temperatur zu bestimmen. Mit dem Temperatursensor können beispielsweise fortlaufend Temperaturdaten bestimmt werden, welche die aktuelle Temperatur in den Innenraum des Fahrzeugs beschreiben. Diese Temperaturdaten können dann an die Recheneinrichtung übertragen werden. Die Recheneinrichtung kann nun bevorzugt dazu ausgebildet sein, anhand der Temperaturdaten zu überprüfen, ob die Temperatur in dem Innenraum des Fahrzeugs einen vorbestimmten Maximalwert überschreitet. Dies kann beispielsweise bei heißen Umgebungsbedingungen der Fall sein, bei welchen sich der Innenraum des Fahrzeugs aufheizt. In diesem Fall droht dem Lebewesen in dem Innenraum des Fahrzeugs eine Beeinträchtigung der Gesundheit durch die hohen Temperaturen. In gleicher Weise kann mittels der Recheneinrichtung überprüft werden, ob die Temperatur in dem Innenraum des Fahrzeugs einen Minimalwert unterschreitet. Bei sehr kalten Umgebungstemperaturen kann es ebenfalls der Fall sein, dass sich der Innenraum des Fahrzeugs stark abgekühlt und auch jedoch die Gesundheit des Lebewesens beeinträchtigt werden kann. Falls beispielsweise erkannt wird, dass die Temperatur in dem Innenraum des Fahrzeugs nicht in einem vorbestimmten Bereich liegt, kann das Warnsignal ausgegeben werden. Somit kann eine Verletzung des Lebewesens auf zuverlässige Weise verhindert werden.

Weiterhin ist vorteilhaft, wenn die Vorrichtung eine Schnittstelle zum Anpassen von Einstellungen der Recheneinrichtung aufweist. Über diese Schnittstelle kann die Recheneinrichtung programmiert werden. Diese Schnittstelle kann beispielsweise als USB-Schnittstelle oder dergleichen ausgebildet sein. Über die Schnittstelle kann die Vorrichtung beispielsweise mit einem Rechner oder Computer verbunden werden. Es kann auch vorgesehen sein, dass die Schnittstelle eine drahtlose Verbindung zu einem mobilen Endgerät, beispielsweise einem Smartphone oder Tablet ermöglicht. Somit kann der Nutzer entsprechende Einstellungen vornehmen. Beispielsweise können entsprechende Telefonnummern angegeben werden, welche mittels der Kommunikationseinrichtung kontaktiert werden. Ferner können entsprechende Grenzwerte für die Temperatur vorgegeben werden. Somit kann der Betrieb der Vorrichtung an die Vorgaben des Nutzers angepasst werden.

In einer weiteren Ausführungsform weist die Vorrichtung einen Anschluss auf, welcher mit einer Spannungsversorgung des Fahrzeugs verbindbar ist. Über diesen Anschluss kann die Vorrichtung beispielsweise mit einem entsprechenden Kabel mit einer Spannungsversorgung beziehungsweise der Batterie des Fahrzeugs verbunden werden. Somit können die einzelnen Komponenten der Vorrichtung mit elektrischer Energie versorgt werden. Zudem kann es vorgesehen sein, dass die Vorrichtung einen elektrischen Energiespeicher oder eine Batterie aufweist. Dieser elektrische Energiespeicher kann aufgeladen werden und kann die einzelnen Komponenten der Vorrichtung mit elektrischer Energie versorgen.

In einer bevorzugten Ausführungsform weist die Vorrichtung eine Befestigungseinrichtung zur Befestigung der Vorrichtung an einem Dachhimmel des Fahrzeugs und/oder einer Fahrzeugscheibe des Fahrzeugs auf. Beispielsweise kann die Befestigungseinrichtung an einer Seitenscheibe des Fahrzeugs angeordnet werden. Die Befestigungseinrichtung kann einen Bereich aufweisen, welcher U-förmig ausgebildet ist, und welcher an einer Oberseite der Fahrzeugscheibe angeordnet werden kann. Zur Befestigung der Vorrichtung an dem Fahrzeug beziehungsweise der Fahrzeugscheibe kann die Fahrzeugscheibe zunächst herabgelassen werden. Im Anschluss daran kann die Befestigungseinrichtung an der Oberseite der Fahrzeugscheibe angeordnet werden. Danach kann die Fahrzeugscheibe wieder geschlossen werden. Somit kann eine einfache Befestigung der Vorrichtung an dem Fahrzeug ermöglicht werden. Dadurch, dass die Fahrzeugscheibe wieder geschlossen wird, ist die Vorrichtung von außen nicht mehr zugänglich und kann nicht entwendet werden.

Ein erfindungsgemäßes Verfahren dient zum Überwachen eines Innenraums eines Fahrzeugs Bei dem Verfahren wird mittels einer Sensoreinrichtung einer Vorrichtung ein Lebewesen in dem Innenraum erfasst und mittels einer Recheneinrichtung der Vorrichtung wird ein Warnsignal ausgegeben, falls das Lebewesen in dem Innenraum erkannt wird. Dabei ist die Vorrichtung mobil ausgebildet und ist in dem Innenraum des Fahrzeugs anordenbar. Hierbei ist ferner vorgesehen, dass mittels eines Radarsensors der Sensoreinrichtung Radarsignale ausgesendet und empfangen werden. Des Weiteren wird mittels des Radarsensors eine Bewegung des Lebewesens anhand der ausgesendeten und empfangen Radarsignale erkannt.

Bevorzugt wird die Vorrichtung abwechselnd in einem Aktivmodus, in welchen das Lebewesen erfasst wird, und in einem Ruhemodus betrieben. Beispielsweise kann die Vorrichtung nur dann aktiviert werden, wenn anhand der Positionsdaten des Positionsbestimmungssystems erkannt wird, dass das Fahrzeug abgestellt wurde. Ferner kann nach einer vorbestimmten Zeitdauer, beispielsweise einige Sekunden nach dem Abstellen des Fahrzeugs, in den Aktivmodus gewechselt werden. Im Anschluss daran können die entsprechenden Messungen mit der Sensoreinrichtung beziehungsweise dem Radarsensor durchgeführt werden. Die Messungen können für eine vorbestimmte Zeitdauer, beispielsweise 3 Sekunden und durchgeführt werden. Es kann auch vorgesehen sein, dass die Messungen so lange durchgeführt werden, bis auf zuverlässige Weise beurteilt werden kann, ob ein Lebewesen in dem Fahrzeug zurückgelassen lassen wurde oder nicht. Danach kann die Vorrichtung wieder in den Ruhemodus für eine vorbestimmte Zeitdauer überführt werden. In dem Ruhemodus oder auch Stand-by-Modus weist die Vorrichtung im Vergleich zu dem Aktivmodus einen deutlich geringeren Energieverbrauch auf. Nach einer vorbestimmten Zeitdauer, beispielsweise nach 30 Sekunden, kann die Vorrichtung wieder in den Aktivmodus überführt werden und entsprechende Messungen können durchgeführt werden. Danach kann die Vorrichtung wieder in den Ruhezustand überführt werden. Beispielsweise 3 Minuten später kann dann wieder der Aktivmodus eingenommen werden. Insgesamt kann es vorgesehen sein, dass die Zeitdauer für den Ruhemodus fortlaufend erhöht wird. Somit kann Energie auf effiziente Weise eingespart werden.

Die mit Bezug auf die erfindungsgemäße Vorrichtung vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung einer Vorrichtung zum Überwachen eines Innenraums eines Fahrzeugs; und

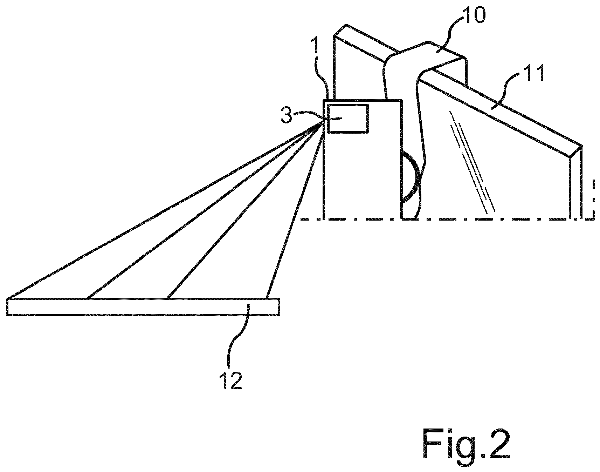

- Fig. 2: eine schematische Darstellung einer Vorrichtung gemäß einer weiteren Ausführungsform, wobei die Vorrichtung eine Befestigungseinrichtung zur Befestigung der Vorrichtung einer Fensterscheibe des Fahrzeugs aufweist.

In den Figuren werden gleiche oder funktionsgleiche Elemente mit den gleichen Bezugszeichen versehen.

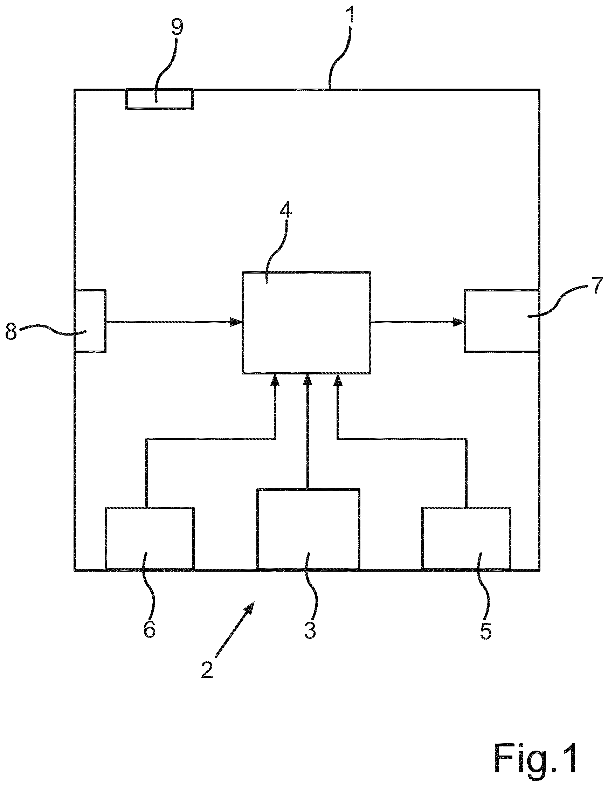

Fig. 1 zeigt in einer schematischen Darstellung eine Vorrichtung 1, welche dazu dient, ein Lebewesen in einem Fahrzeug zu erfassen. Insbesondere dient die Vorrichtung 1 dazu, zu überprüfen, ob ein Kleinkind oder ein Säugling in dem Fahrzeug zurückgelassen wurden. Die Vorrichtung 1 kann auch dazu verwendet werden, um die Bewegung eines im Fahrzeug zurückgelassenen Lebewesens zu erkennen. Dabei ist die Vorrichtung 1 mobil beziehungsweise tragbar aus gebildet. Dies bedeutet insbesondere, dass die Vorrichtung 1 nicht fest in dem Fahrzeug verbaut ist.

Die Vorrichtung 1 umfasst eine Sensoreinrichtung 2, mittels welcher das Lebewesen erkannt werden kann. Dabei weist die Sensoreinrichtung 2 einen Radarsensor 3 auf. Mit dem Radarsensor 3 kann ein Radarsignal ausgesendet werden und ein in der Umgebung des Radarsensors 3 reflektiertes Radarsignal wieder empfangen werden. Ferner kann anhand einer Doppler-Verschiebung zwischen dem ausgesendeten Radarsignal und dem von den Lebewesen reflektierten und wieder empfangenen Radarsignal eine Bewegung des Lebewesens erkannt werden. Außerdem umfasst die Vorrichtung 1 eine Recheneinrichtung 4, welche mit dem Radarsensor 3 zur Datenübertragung verbunden ist. Somit können Sensordaten, die mit dem Radarsensor 3 bereitgestellt werden, an die Recheneinrichtung 4 übertragen werden. Mittels der Recheneinrichtung 4 kann auf Grundlage der Sensordaten erkannt werden, ob sich das Lebewesen in dem Innenraum des Fahrzeugs befindet und/oder ob sich das Lebewesen bewegt.

Außerdem umfasst die Vorrichtung 1 ein Positionsbestimmungssystem 5, welches insbesondere einen GPS-Empfänger aufweisen kann. Mittelst des Positionsbestimmungssystems 5 kann die aktuelle Position der Vorrichtung 1 bestimmt werden. Auch das Positionsbestimmungssystem 5 ist mit der Recheneinrichtung 4 zur Datenübertragung verbunden. Auf diese Weise können Positionsdaten, welche die aktuelle Position der Vorrichtung 1 beschreiben, von dem Positionsbestimmungssystem 5 an die Recheneinrichtung 4 übertragen werden. Somit kann die Recheneinrichtung 4 beispielsweise feststellen, dass das Fahrzeug, in welchem die Vorrichtung 1 angeordnet ist, abgestellt wurde, falls sich die Position der Vorrichtung 1 für eine vorbestimmte Zeitdauer nicht geändert hat.

Außerdem umfasst die Vorrichtung 1 einen Temperatursensor 6, mittels welchem die aktuelle Temperatur in einer Umgebung der Vorrichtung 1 beziehungsweise in dem Innenraum des Fahrzeugs erfasst werden kann. Mittels des Temperatursensors 6 können Temperaturdaten, welche die aktuelle Temperatur in der Umgebung der Vorrichtung 1 beschreiben, an die Recheneinrichtung 4 übertragen werden. Die Recheneinrichtung 4 kann dann überprüfen, ob die aktuelle Temperatur im Innenraum des Fahrzeugs einen vorbestimmten Maximalwert für die Temperatur überschreitet oder einen vorbestimmten Minimalwert für die Temperatur unterschreitet.

In Abhängigkeit von vorbestimmten Kriterien kann dann mittels der Recheneinrichtung 4 ein Warnsignal erzeugt werden. Dieses Warnsignal kann beispielsweise erzeugt werden, wenn anhand der Sensordaten des Radarsensors 3 erkannt wird, dass sich das Lebewesen in dem Innenraum des Fahrzeugs bewegt. Ferner kann dieses Warnsignal ausgegeben werden, falls anhand der Positionsdaten des Positionsbestimmungssystems 5 erkannt wird, dass das Fahrzeug abgestellt wurde. Zudem kann das Warnsignal ausgegeben werden, falls anhand der Temperaturdaten des Temperatursensors 6 erkannt wird, dass der Maximalwert für die Temperatur überschritten wird und/oder der Minimalwert wird die Temperatur unterschritten wird.

Darüber hinaus umfasst die Vorrichtung 1 eine Kommunikationseinrichtung 7, mittels welcher eine Kommunikationsverbindung aufgebaut werden kann, falls mittels der Recheneinrichtung 4 das Warnsignal erzeugt wird. Die Kommunikationseinrichtung 7 kann beispielsweise ein GSM-Interface und eine Antenne aufweisen. Ferner kann die Kommunikationseinrichtung 7 eine SIM-Karte aufweisen. Mittels der Kommunikationseinrichtung 7 kann beispielsweise eine Telefonverbindung zu unterschiedlichen gespeicherten Telefonnummern aufgebaut werden. Es kann auch eine entsprechende Reihenfolge von Telefonnummern vorgegeben sein, welche der Reihe nach angerufen werden. Somit wird es beispielsweise ermöglicht, bei dem Ausgeben des Warnsignals mittels der Recheneinrichtung 4 eine Telefonverbindung zu einem Telefon des Fahrers des Fahrzeugs oder zu einer Notrufnummer aufzubauen.

Darüber hinaus umfasst die Vorrichtung 1 eine Schnittstelle 8, über welche die Vorrichtung 1 beziehungsweise die Recheneinrichtung 4 mit einem externen Gerät zur Datenübertragung verbunden werden kann. Die Schnittstelle 8 kann beispielsweise als USB-Schnittstelle ausgebildet sein. Über die Schnittstelle kann der Betrieb der Recheneinrichtung 4 beziehungsweise entsprechende Einstellungen der Recheneinrichtung 4 angepasst werden. Beispielsweise können entsprechende Minimalwert oder Maximalwerte für die Temperatur vorgegeben werden. Es kann auch vorgesehen sein, dass entsprechende Rufnummern beziehungsweise Telefonnummern eingetragen werden, welche mittels der Kommunikationseinrichtung 7 angerufen werden.

Außerdem umfasst die Vorrichtung 1 einen Anschluss 9, über welchen die Vorrichtung 1 mit elektrischer Energie beziehungsweise elektrischer Spannung versorgt werden kann. Dieser Anschluss 9 kann beispielsweise mit einer 12 V-Spannungsversorgung des Fahrzeugs verbunden werden. Um elektrische Energie zu sparen, kann es vorgesehen sein, dass die Vorrichtung 1 alternierend in einem Ruhemodus und einem Aktivmodus betrieben wird. Die Wahl des Ruhemodus oder des Aktivmodus kann in Abhängigkeit von der erkannten Bewegung des Fahrzeugs beziehungsweise der Vorrichtung 1 gewählt werden. Beispielsweise kann während der Bewegung des Fahrzeugs der Ruhemodus eingenommen werden und der Aktivmodus nur oder nur teilweise eingenommen werden, falls erkannt wurde, dass das Fahrzeug abgestellt wurde. Somit kann der Energieverbrauch der Vorrichtung reduziert werden. Beispielsweise kann es vorgesehen sein, dass im Aktivmodus im Durchschnitt eine elektrische Stromstärke kleiner 100 Mikroampere benötigt wird.

Beispielsweise kann die Vorrichtung 1 aktiviert werden beziehungsweise in den Aktivmodus überführt werden, falls erkannt wurde, dass das Fahrzeug abgestellt wurde. Dies kann beispielsweise eine vorbestimmte Zeitdauer nach dem Abstellen des Fahrzeugs erfolgen. Dann können mittels der Sensoreinrichtung 2 die Messungen durchgeführt werden. Dies kann beispielsweise für eine Zeitdauer von 3 Sekunden vorgesehen sein. Es kann auch vorgesehen sein, dass die Messungen solange durchgeführt werden, bis zuverlässig entschieden werden kann, ob ein sich bewegendes Lebewesen in dem Fahrzeug vorhanden ist. Im Anschluss daran kann die Vorrichtung wieder für eine vorbestimmte Zeitdauer in den Ruhemodus überführt werden. Danach kann die Vorrichtung wieder in den Aktivmodus überführt werden. Ferner können die Zeitintervalle entsprechend verlängert werden.

Für 2 zeigt in einer schematischen Darstellung die Vorrichtung 1 gemäß einer weiteren Ausführungsform. Hierbei ist zu erkennen, dass die Vorrichtung 1 eine Befestigungseinrichtung 10 aufweist, mittels welcher die Vorrichtung 1 in dem Innenraum des Fahrzeugs befestigt werden kann. Vorliegend ist die Befestigungseinrichtung 10 im Wesentlichen U-förmig ausgebildet. Die Befestigungseinrichtung 10 ist vorliegend an einer Fensterscheibe 11 des Fahrzeugs angeordnet. Zur Befestigung der Vorrichtung 1 an der Fensterscheibe 11 kann die Fensterscheibe 11 zunächst herabgelassen werden. Danach kann die Befestigungseinrichtung 10 an der Fensterscheibe 11 angeordnet werden und im Anschluss daran kann die Fensterscheibe 11 wieder geschlossen werden. Dabei kann es vorgesehen sein, dass die Befestigungseinrichtung 10 drehbar oder schwenkbar zu dem Rest der Vorrichtung 1 ausgebildet ist. Mit anderen Worten kann die Sensoreinrichtung 2 relativ zu der Befestigungseinrichtung 10 bewegt werden beziehungsweise verstellt werden. Somit kann die Vorrichtung 1 derart angeordnet werden, dass mittels der Sensoreinrichtung 2 beziehungsweise des Radarsensors 3 eine Rücksitzbank 12 des Fahrzeugs überwacht werden kann.

## Patentansprüche

1. Vorrichtung (1) zum Überwachen eines Innenraums eines Fahrzeugs, umfassend eine Sensoreinrichtung (2) zum Erfassen eines Lebewesens in dem Innenraum und eine Recheneinrichtung (4) zum Ausgeben eines Warnsignals beim Erkennen des Lebewesens in dem Innenraum mittels der Sensoreinrichtung (2), wobei die Vorrichtung (1) mobil ausgebildet ist und in dem Innenraum des Fahrzeugs anordenbar ist,
**dadurch gekennzeichnet, dass**
die Sensoreinrichtung (2) einen Radarsensor (3) zum Aussenden und Empfangen von Radarsignalen umfasst und die Recheneinrichtung (4) ausgebildet ist, anhand der ausgesendeten und empfangen Radarsignale eine Bewegung des Lebewesens zu erkennen.

2. Vorrichtung (1) nach Anspruch 1,
**dadurch gekennzeichnet, dass**
die Recheneinrichtung (4) dazu ausgebildet ist, anhand einer Doppler-Verschiebung zwischen den ausgesendeten Radarsignalen und den empfangenen Radarsignalen die Bewegung des Lebewesens zu erkennen.

3. Vorrichtung (1) nach Anspruch 1 oder 2,
**dadurch gekennzeichnet, dass**
die Vorrichtung (1) ein Positionsbestimmungssystem (5) zum Bereitstellen von Positionsdaten aufweist und die Recheneinrichtung (4) dazu ausgebildet ist, ein Abstellen des Fahrzeugs anhand der Positionsdaten zu erkennen.

4. Vorrichtung (1) nach Anspruch 3,
**dadurch gekennzeichnet, dass**
die Recheneinrichtung (4) dazu ausgebildet ist, das Warnsignal bei dem erkannten Abstellen des Fahrzeugs auszugeben.

5. Vorrichtung (1) nach einem der vorhergehenden Ansprüche,
**dadurch gekennzeichnet, dass**
die Vorrichtung (1) eine Kommunikationseinrichtung (7) aufweist, welche dazu ausgebildet ist, bei der Ausgabe des Warnsignals eine Kommunikationsverbindung aufzubauen.

6. Vorrichtung (1) nach einem der vorhergehenden Ansprüche,
**dadurch gekennzeichnet, dass**
die Vorrichtung (1) einen Temperatursensor (6) zum Messen einer Temperatur in dem Innenraum aufweist und die Recheneinrichtung (4) dazu ausgebildet ist, das Warnsignal in Abhängigkeit von der gemessenen Temperatur zu bestimmen.

7. Vorrichtung (1) nach einem der vorhergehenden Ansprüche,
**dadurch gekennzeichnet, dass**
die Vorrichtung (1) eine Schnittstelle (8) zum Anpassen von Einstellungen der Recheneinrichtung (4) aufweist.

8. Vorrichtung (1) nach einem der vorhergehenden Ansprüche,
**dadurch gekennzeichnet, dass**
die Vorrichtung (1) einen Anschluss (9) aufweist, welcher mit einer Spannungsversorgung des Fahrzeugs verbindbar ist.

9. Vorrichtung (1) nach einem der vorhergehenden Ansprüche,
**dadurch gekennzeichnet, dass**
die Vorrichtung (1) eine Befestigungseinrichtung (10) zur Befestigung der Vorrichtung an einem Dachhimmel des Fahrzeugs und/oder einer Fahrzeugscheibe (11) des Fahrzeugs aufweist.

10. Verfahren zum Überwachen eines Innenraums eines Fahrzeugs, bei welchem mittels einer Sensoreinrichtung (2) einer Vorrichtung (1) ein Lebewesen in dem Innenraum erfasst wird und mittels einer Recheneinrichtung (4) der Vorrichtung (1) ein Warnsignal ausgegeben wird, falls das Lebewesen in dem Innenraum erkannt wird, wobei die Vorrichtung (1) mobil ausgebildet ist und in dem Innenraum des Fahrzeugs anordenbar ist,
**dadurch gekennzeichnet, dass**
mittels eines Radarsensors (3) der Sensoreinrichtung (2) Radarsignale ausgesendet und empfangen werden und mittels der Recheneinrichtung (4) eine Bewegung des Lebewesens anhand der ausgesendeten und empfangen Radarsignale erkannt wird.

11. Verfahren nach Anspruch 10,
**dadurch gekennzeichnet, dass**
die Vorrichtung (1) abwechselnd in einem Aktivmodus, in welchen das Lebewesen erfasst wird, und in einem Ruhemodus betrieben wird.
